# EUROPÄISCHE PATENTSCHRIFT

(11) **EP 4 301 644 B1**
(45) Veröffentlichungstag und Bekanntmachung des Hinweises auf die Patenterteilung: **01.05.2024**
(21) Anmeldenummer: 22717359.8
(22) Anmeldetag: 18.03.2022
(51) Int. Cl.: B60W 30/08, G08G 1/0967, G08G 1/01, G08G 1/16, G08G 1/052

(54) **VERFAHREN ZUR ERMITTLUNG UND AUSGABE EINER AN EINE FAHRSITUATION ANGEPASSTEN FAHRGESCHWINDIGKEIT**
METHOD FOR DETERMINING AND OUTPUTTING A TRAVEL SPEED ADAPTED TO A DRIVING SITUATION
PROCÉDÉ DE DÉTERMINATION ET DE DÉLIVRANCE D'UNE VITESSE DE DÉPLACEMENT ADAPTÉE À UNE SITUATION DE CONDUITE

(30) Priorität: 30.04.2021 DE 102021002295
(43) Veröffentlichungstag der Anmeldung: 10.01.2024
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2022/057169
(87) Internationale Veröffentlichungsnummer: WO 2022/228777

(56) Entgegenhaltungen:
- EP-B1- 2 861 474

## Beschreibung

Die Erfindung betrifft ein Verfahren zur Ermittlung und Ausgabe einer an eine Fahrsituation angepassten Fahrgeschwindigkeit von Fahrzeugen, wobei anhand erfasster Signale einer Umgebungssensorik ein neben einer Fahrbahn eines Fahrzeuges befindliches und eine dem Fahrzeug vorausliegende Kurve zumindest abschnittsweise verdeckendes Objekt detektiert wird.

Die nicht vorveröffentlichte DE 10 2020 003 073 B3 beschreibt ein Verfahren und eine Vorrichtung zum automatisierten Fahrbetrieb eines Fahrzeuges. Das Verfahren sieht vor, dass bei einer dem Fahrzeug vorausliegenden Kurve eine aufgrund der Kurve erwartete Sichtweitenbeschränkung zumindest einer in Fahrtrichtung des Fahrzeuges gerichteten Erfassungseinheit einer Umgebungssensorik ermittelt wird und dann, wenn ermittelt wird, dass eine Sichtweite der zumindest einen Erfassungseinheit einen vorgegebenen Schwellwert unterschreitet, automatisch ein Spurwechsel des Fahrzeuges auf eine kurvenäußere Fahrspur durchgeführt wird, sofern eine kurvenäußere Fahrspur vorhanden ist, wobei vorzugsweise kein Rechtsfahrgebot besteht.

Des Weiteren offenbart die DE 10 2015 223 176 A1 ein Fahrerassistenzsystem für ein Fahrzeug mit Umgebungssensoren, die eine Umgebung des Fahrzeuges sensorisch erfassen, und mit einer Datenverarbeitungseinheit, die Sensordaten der Umgebungssensoren zur Erkennung von Hindernissen in der Fahrzeugumgebung auswertet. Zudem ist ein Verfahren zur Ermittlung von Verdeckungsbereichen in der Fahrzeugumgebung offenbart. Das Verfahren sieht vor, dass die Sensordaten, die von den Umgebungssensoren erzeugt werden, zur Erkennung von Hindernissen in der Fahrzeugumgebung des Fahrzeuges ausgewertet werden. Zudem werden in Abhängigkeit der erkannten Hindernisse von Verdeckungsbereichen, die von den erkannten Hindernissen verdeckt werden und einen Sichtbereich von optischen Umgebungssensoren des Fahrzeuges einschränken, berechnet.

Aus der EP 2 861 474 B1 ist ein Verfahren zur Geschwindigkeitsregelung eines Fahrzeugs bei einer Annäherung des Fahrzeugs an eine Kreuzung bekannt, wobei die Umgebung des Fahrzeugs erfasst wird und beim Erkennen von verdeckten Kreuzungsbereichen angenommen wird, dass aus den verdeckten Kreuzungsbereichen Fahrzeuge mit einer angenommenen Geschwindigkeit herausfahren könnten, und wobei anhand der aktuellen Fahrgeschwindigkeit des Fahrzeugs, der erkannten verdeckten Kreuzungsbereiche und der angenommenen Geschwindigkeiten der aus den verdeckten Kreuzungsbereichen herausfahrenden Fahrzeuge ein Sollgeschwindigkeitsprofil bestimmt wird, das der Geschwindigkeitsregelung des Fahrzeugs zugrunde gelegt wird.

Der Erfindung liegt die Aufgabe zugrunde, ein Verfahren zur Ermittlung und Ausgabe einer an eine Fahrsituation angepassten Fahrgeschwindigkeit für ein Fahrzeug anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Ermittlung und Ausgabe einer an eine Fahrsituation angepassten Fahrgeschwindigkeit von Fahrzeugen sieht vor, dass anhand erfasster Signale einer Umgebungssensorik eines Fahrzeugs ein neben einer Fahrbahn des Fahrzeuges befindliches und eine dem Fahrzeug vorausliegende Kurve zumindest abschnittsweise verdeckendes Objekt detektiert wird. Erfindungsgemäß werden erfasste Geschwindigkeitsverhalten von weiteren Fahrzeugen im Bereich der Kurve, in welchen jeweils eine Fahrgeschwindigkeit der weiteren Fahrzeuge eine vorgegebene lokal zulässige Höchstgeschwindigkeit zum Durchfahren der Kurve unterschreitet, von dem Fahrzeug an eine mit dem Fahrzeug datentechnisch gekoppelte fahrzeugexterne Rechnereinheit übermittelt. Zudem wird eine Position des verdeckenden Objektes an die Rechnereinheit übermittelt. Mittels der Rechnereinheit wird ein kausaler Zusammenhang zwischen den erfassten Geschwindigkeitsverhalten der weiteren Fahrzeuge und dem verdeckenden Objekt überprüft, wobei die Überprüfung auf der Feststellung basiert, dass die weiteren Fahrzeuge mit einer deutlich verringerten Fahrgeschwindigkeit, als zum Durchfahren der Kurve erforderlich ist, fahren, wenn ihre Sicht auf die Kurve verdeckt ist. Im Fall, dass ein kausaler Zusammenhang zwischen den Geschwindigkeitsverhalten der weiteren Fahrzeuge und dem verdeckenden Objekt besteht, wird eine aus den Fahrgeschwindigkeiten der weiteren Fahrzeuge ermittelte mittlere Fahrgeschwindigkeit zum Durchfahren der Kurve als Geschwindigkeitsempfehlung in einer digitalen Karte abgelegt und zumindest mit der Rechnereinheit datentechnisch gekoppelten Fahrzeugen zur Verfügung gestellt.

Durch Anwendung des Verfahrens erfährt ein Fahrzeugnutzer, dem die Geschwindigkeitsempfehlung im Fahrzeug ausgegeben wird, eine situationsgerecht ausgegebene Geschwindigkeitsempfehlung und gegebenenfalls eine Geschwindigkeitsregelung in einer Fahrsituation mit einer vergleichsweise ungewöhnlichen Verdeckung zumindest eines Kurvenabschnittes. Dabei resultiert die Geschwindigkeitsempfehlung aus zuvor beobachteten und an die zentrale Rechnereinheit übermittelten Geschwindigkeitsverläufen weiterer Fahrzeuge.

Somit erlebt der Fahrzeugnutzer bei einer aus der Geschwindigkeitsempfehlung resultierenden Geschwindigkeitsregelung seines Fahrzeuges auch in einer ihm unbekannten Umgebung eine angepasste Fahrweise seines Fahrzeuges bei einer Sichtverdeckung, wodurch ein Potential für eine kritische Folgesituation, beispielsweise durch einen in der Kurve durch das verdeckende Objekt auf eine Fahrbahn tretenden, nicht sichtbaren Fußgänger, verringert wird.

Die mittlere Fahrgeschwindigkeit wird also anhand der ermittelten Geschwindigkeitsverläufe der weiteren Fahrzeuge ermittelt. Es wird also ein Durchschnitt gebildet wird. Die mittlere Fahrgeschwindigkeit liegt also zwischen der lokal zulässigen Höchstgeschwindigkeit zum Durchfahren der Kurve und der Fahrgeschwindigkeit, mit welcher die weiteren Fahrzeuge die Kurve wegen der Sichtverdeckung durchfahren. Insbesondere kann die Kurve bei Verwendung der Geschwindigkeitsempfehlung, also der mittleren Fahrgeschwindigkeit, angemessen und sicher durchfahren werden. Dabei besteht dennoch die Möglichkeit, auf eine kritische Situation, beispielsweise auf ein in der Kurve stehendes Müllfahrzeug und/oder auf eine in der Kurve auf einer Fahrbahn stehende Person, zu reagieren.

In einer weiteren Ausführungsform wird die mittlere Fahrgeschwindigkeit zum Durchfahren der Kurve einem Assistenzsystem zum automatisierten Fahrbetrieb zumindest der mit der Rechnereinheit datentechnisch gekoppelten Fahrzeuge zugeführt. D.h. dass das Assistenzsystem automatisch die mittlere Fahrgeschwindigkeit für den automatisierten Fahrbetrieb verwendet, so dass eine momentane Fahrgeschwindigkeit bei einem Zufahren auf die Kurve allmählich verringert werden kann und somit ein abruptes Abbremsen aufgrund der Sichtverdeckung weitestgehend ausgeschlossen werden kann.

In einer weiteren möglichen Ausführungsform wird bei einem Zufahren auf die Kurve im automatisierten Fahrbetrieb eines mit der Rechnereinheit datentechnisch gekoppelten Fahrzeuges ein Hinweis auf eine folgende Verringerung einer momentanen Fahrgeschwindigkeit des Fahrzeuges in diesem ausgegeben. Somit wird ein Fahrzeugnutzer dieses Fahrzeuges über die anstehende Verringerung der Fahrgeschwindigkeit informiert. Dadurch kann eine falsche Schlussfolgerung des Fahrzeugnutzers aufgrund der sich verringernden Fahrgeschwindigkeit, beispielsweise, dass ein Defekt vorliegt, weitestgehend vermieden werden.

Um anderen Fahrzeugen die Geschwindigkeitsempfehlung zum Durchfahren der Kurve mit zumindest teilweiser Sichtverdeckung durch das verdeckende Objekt zugänglich zu machen, wird in einer möglichen Weiterbildung des Verfahrens die Geschwindigkeitsempfehlung mittels einer Fahrzeug-zu-Fahrzeugkommunikation an sich in der Umgebung eines mit der Rechnereinheit datentechnisch gekoppelten Fahrzeuges befindende weitere Fahrzeuge im Bereich der Kurve gesendet. Dadurch, dass dann diese Fahrzeuge die Kurve mit der mittleren Fahrgeschwindigkeit durchfahren, kann ein Verkehrsfluss im Bereich dieser Kurve optimiert werden, da diese Fahrzeuge aufgrund der Sichtverdeckung die Kurve nicht, wie ohne vorhandene Geschwindigkeitsempfehlung, mit vergleichsweise geringer Fahrgeschwindigkeit, die die mittlere Fahrgeschwindigkeit unterschreitet, durchfahren.

Ausführungsbeispiele der Erfindung werden im Folgenden anhand einer Zeichnung näher erläutert.

Dabei zeigt die:

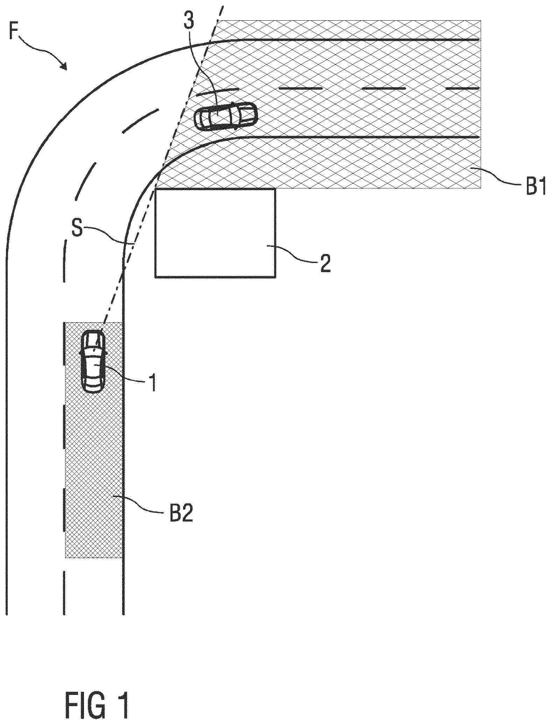

- Fig. 1: schematisch einen Abschnitt einer Fahrbahn mit einem auf eine abschnittsweise verdeckte Kurve zufahrenden Fahrzeug.

In der einzigen Figur ist ein Abschnitt einer Fahrbahn F mit einer Kurve K dargestellt, wobei deren Verlauf für ein auf die Kurve K zufahrendes Fahrzeug 1 verdeckt ist. Dabei resultiert eine Sichtverdeckung für einen Fahrzeugnutzer des Fahrzeuges 1 aus einem vergleichsweise nah neben einem Rand der Fahrbahn F, kurveninnseitig stehenden Objekt 2, beispielsweise einem Haus. Z. B. handelt es sich bei dem Haus um ein denkmalgeschütztes Fachwerkhaus, welches nicht abgerissen werden darf. Auch kann es sein, dass die Fahrbahn F in Richtung des Objektes 2 verbreitert wurde und das Objekt 2 deshalb so nah an der Fahrbahn F steht.

Eine Sichtlinie S des Fahrzeugnutzers zeigt, dass ein für den Fahrzeugnutzer nicht einsehbarer Bereich B aufgrund des Objektes 2 vergleichsweise groß ist.

Im Allgemeinen ist bekannt, dass es zahlreiche Einflüsse gibt, weshalb bestimmte Streckenabschnitte mit einer geringeren Fahrgeschwindigkeit befahren werden, als es beispielsweise ein Verlauf einer Kurve K zulässt und/oder es eine zulässige Höchstgeschwindigkeit erlaubt.

Ein solches Objekt 2 kann Grund für eine verhältnismäßig kritische Situation sein, wenn ein Fahrzeug 1 mit vergleichsweise hoher Fahrgeschwindigkeit in die Kurve K fährt, da sich in dem für den Fahrzeugnutzer nicht einsehbaren Bereich B. z. B. ein Müllfahrzeug und/oder ein die Fahrbahn F querender Fußgänger befinden kann. Gemäß dem vorliegenden Ausführungsbeispiel wird ein dem Fahrzeug 1 vorausfahrendes weiteres Fahrzeug 3 durch das Objekt 2 verdeckt.

Aus diesem Grund ist ein Fahrzeugnutzer mehr oder weniger dazu gezwungen, insbesondere zur Vermeidung einer solchen kritischen Situation, seine momentane Fahrgeschwindigkeit für ein Durchfahren der Kurve K zu verringern. Dabei wird die momentane Fahrgeschwindigkeit oftmals derart verringert, dass die momentane Fahrgeschwindigkeit zum Durchfahren der Kurve eine für diesen Abschnitt der Fahrbahn F zulässige Höchstgeschwindigkeit sowie eine Fahrgeschwindigkeit zum sicheren Durchfahren der Kurve K unterschreitet.

Um einem Fahrzeugnutzer in einem Fahrzeug 1, welches auf eine solche Kurve K mit einem nicht einsehbaren Bereich B 1 zufährt hinsichtlich einer Wahl einer angemessenen Fahrgeschwindigkeit zum Durchfahren der Kurve K zu unterstützen, ist ein im Folgenden beschriebenes Verfahren vorgesehen.

Das auf die Kurve K zufahrende Fahrzeug 1 ist ein sogenanntes Systemfahrzeug und mit einer nicht näher dargestellten Rechnereinheit datentechnisch gekoppelt. Dabei gehört das Fahrzeug 1 einer Fahrzeugflotte, beispielsweise eines Fahrzeugherstellers, an.

Das Fahrzeug 1 umfasst eine Umgebungssensorik mit einer Anzahl im und/oder am Fahrzeug 1 angeordneter Erfassungseinheiten, die im Fahrbetrieb des Fahrzeuges 1 fortlaufend Signale erfassen. Anhand der erfassten Signale werden eine Umgebung des Fahrzeuges 1 und sich in dieser befindende Objekte 2 detektiert.

So werden neben dem eine Sicht des Fahrzeugnutzers verdeckenden Objekt 2 auch nicht näher dargestellte weitere Fahrzeuge 3, insbesondere vorausfahrende Fahrzeuge, anhand erfasster Signale der Umgebungssensorik detektiert.

Anhand der erfassten Signale in Bezug auf die vorausfahrenden Fahrzeuge 3 kann ein jeweiliges Geschwindigkeitsverhalten, d. h. eine Veränderung einer momentanen Fahrgeschwindigkeit, insbesondere eine Verringerung der Fahrgeschwindigkeit, ermittelt werden. Dabei ändern die weiteren Fahrzeuge 3, die auch der Fahrzeugflotte zugehörig sein können, ihre momentane Fahrgeschwindigkeit bei einem Zufahren auf die Kurve K, insbesondere in einem schraffiert dargestellten weiteren Bereich B2 der Fahrbahn F.

Anhand der erfassten Geschwindigkeitsverhalten der weiteren Fahrzeuge 3 kann eine Kritikalität wegen der Sichtverdeckung abgeleitet werden. Dazu wird ein Geschwindigkeitsverhalten in dem weiteren Bereich des Objektes 2 von einer Vielzahl weiterer Fahrzeuge 3 ermittelt.

Das in Bezug auf den weiteren Bereich B2 vor Einfahrt in die Kurve K sensorisch beobachtete Geschwindigkeitsverhalten weiterer Fahrzeuge 3 wird an die mit dem Fahrzeug 1 verbundene zentrale Rechnereinheit übermittelt. Zur Erzielung einer statistisch aussagefähigen Stichprobe zur Auswertung der Geschwindigkeitsverhalten werden diese von mehreren der Fahrzeugflotte zugehörigen Fahrzeugen 1 erfasst und an die datentechnisch gekoppelte Rechnereinheit übermittelt. Zudem wird eine Position des die Sicht verdeckenden Objektes 2 an die Rechnereinheit übermittelt.

Anhand der übermittelten Geschwindigkeitsverhalten und der Position des Objektes 2 wird ein kausaler Zusammenhang zwischen den Geschwindigkeitsverhalten der weiteren Fahrzeuge 3 und dem Objekt 2 überprüft. Insbesondere wird das Geschwindigkeitsverhalten der weiteren Fahrzeuge 3 unter Berücksichtigung der lokal zulässigen Höchstgeschwindigkeit zum Durchfahren der Kurve K und unter Berücksichtigung der Fahrgeschwindigkeit zum sicheren Durchfahren der Kurve K statistisch ausgewertet. Anhand dessen wird ermittelt, ob ein kausaler Zusammenhang zwischen beobachteter Verringerung der Fahrgeschwindigkeit der weiteren Fahrzeuge 3 und dem die Sicht verdeckenden Objekt 2 besteht.

Wird ermittelt, dass ein kausaler Zusammenhang zwischen den beobachteten Geschwindigkeitsverhalten der weiteren Fahrzeuge 3 und dem die Sicht verdeckenden Objekt 2 besteht, dann wird eine anhand der Geschwindigkeitsverhalten ermittelte mittlere Fahrgeschwindigkeit als Geschwindigkeitsempfehlung für das Durchfahren der Kurve K ermittelt.

Diese Geschwindigkeitsempfehlung wird dann in einer digitalen Karte hinterlegt, die in den Fahrzeugen 1 der Fahrzeugflotte, die mit der Rechnereinheit datentechnisch gekoppelt sind, angezeigt wird. Insbesondere kann die Geschwindigkeitsempfehlung in Form eines Symbols, z. B. einer Richtgeschwindigkeit, auf einer Anzeigeeinheit des jeweiligen Fahrzeuges 1, auf welche die Karte angezeigt wird, ausgegeben werden. Denkbar ist auch, dass die Geschwindigkeitsempfehlung als Sprachhinweis und/oder in anderer geeigneter Form in dem Fahrzeug 1 ausgegeben wird.

In einer Ausführungsform des Verfahrens ist vorgesehen, dass derartige Geschwindigkeitsempfehlungen als Geschwindigkeitsprofile Assistenzsystemen des Fahrzeuges 1, welche auf diese zugreifen, zugeführt werden. Dadurch können derartige Beobachtungen einem Fahrzeugnutzer mitgeteilt werden und/oder die Geschwindigkeitsempfehlung wird zur Geschwindigkeitsregelung des Fahrzeuges 1, insbesondere im automatisierten Fahrbetrieb, verwendet. Beispielsweise kann dann bei einem Zufahren auf die Kurve im automatisierten Fahrbetrieb ein Hinweis auf eine folgende Verringerung einer momentanen Fahrgeschwindigkeit des Fahrzeuges 1 in diesem ausgegeben werden.

Weiterhin kann vorgesehen sein, dass die den Fahrzeugen der Fahrzeugflotte vorliegende Geschwindigkeitsempfehlung mittels einer Fahrzeug-zu-Fahrzeugkommunikation an sich in der Umgebung eines der Fahrzeuge 1 befindende, beispielsweise vorausfahrende, weitere Fahrzeuge 3 gesendet wird.

## Patentansprüche

1. Verfahren zur Ermittlung und Ausgabe einer an eine Fahrsituation angepassten Fahrgeschwindigkeit von Fahrzeugen (1), wobei anhand erfasster Signale einer Umgebungssensorik eines Fahrzeuges (1) ein neben einer Fahrbahn (F) des Fahrzeuges (1) befindliches und eine dem Fahrzeug (1) vorausliegende Kurve (K) zumindest abschnittsweise verdeckendes Objekt (2) detektiert wird,
**dadurch gekennzeichnet, dass**
- erfasste Geschwindigkeitsverhalten von weiteren Fahrzeugen (3) im Bereich der Kurve (K), in welchen jeweils eine Fahrgeschwindigkeit der weiteren Fahrzeuge (3) eine vorgegebene lokal zulässige Höchstgeschwindigkeit zum Durchfahren der Kurve (K) unterschreitet, von dem Fahrzeug (1) an eine mit dem Fahrzeug (1) datentechnisch gekoppelte fahrzeugexterne Rechnereinheit übermittelt werden,
- eine Position des verdeckenden Objektes (2) an die Rechnereinheit übermittelt wird,
- mittels der Rechnereinheit ein kausaler Zusammenhang zwischen den erfassten Geschwindigkeitsverhalten der weiteren Fahrzeuge (3) und dem verdeckenden Objekt (2) überprüft wird, wobei die Überprüfung auf der Feststellung basiert, dass die weiteren Fahrzeuge (3) mit einer deutlich verringerten Fahrgeschwindigkeit, als zum Durchfahren der Kurve (K) erforderlich ist, fahren, wenn ihre Sicht auf die Kurve verdeckt ist, und
- im Fall, dass ein kausaler Zusammenhang zwischen den Geschwindigkeitsverhalten der weiteren Fahrzeuge (3) und dem verdeckenden Objekt (2) besteht, eine aus den Fahrgeschwindigkeiten der weiteren Fahrzeuge (3) ermittelte mittlere Fahrgeschwindigkeit zum Durchfahren der Kurve (K) als Geschwindigkeitsempfehlung in einer digitalen Karte abgelegt und zumindest mit der Rechnereinheit datentechnisch gekoppelten Fahrzeugen (1) zur Verfügung gestellt wird.

2. Verfahren nach Anspruch 1,
**dadurch gekennzeichnet, dass** die mittlere Fahrgeschwindigkeit zum Durchfahren der Kurve (K) einem Assistenzsystem zum automatisierten Fahrbetrieb zumindest der mit der Rechnereinheit datentechnisch gekoppelten Fahrzeuge (1) zugeführt wird.

3. Verfahren nach Anspruch 2,
**dadurch gekennzeichnet, dass** bei einem Zufahren auf die Kurve (K) im automatisierten Fahrbetrieb eines mit der Rechnereinheit datentechnisch gekoppelten Fahrzeuges (1) ein Hinweis auf eine folgende Verringerung einer momentanen Fahrgeschwindigkeit des Fahrzeuges (1) in diesem ausgegeben wird.

4. Verfahren nach einem der vorhergehenden Ansprüche,
**dadurch gekennzeichnet, dass** die Geschwindigkeitsempfehlung mittels einer Fahrzeug-zu-Fahrzeugkommunikation an sich in der Umgebung eines mit der Rechnereinheit datentechnisch gekoppelten Fahrzeuges (1) befindende weitere Fahrzeuge (3) im Bereich der Kurve (K) gesendet wird.

## Claims

1. Method for determining and outputting a driving speed of vehicles (1) adapted to a driving situation, wherein an object (2) located next to a roadway (F) of the vehicle (1) and at least partially obscuring a curve (K) ahead of the vehicle (1) is detected on the basis of detected signals from an environment sensor system of a vehicle (1),
**characterized in that**
- the detected speed behavior of further vehicles (3) in the area of the curve (K), in which in each case a driving speed of the further vehicles (3) falls below a predetermined locally permissible maximum speed for driving through the curve (K), is transmitted by the vehicle (1) to a computing unit external to the vehicle (1), which is coupled to the vehicle by means of data technology,
- a position of the obscuring object (2) is transmitted to the computing unit,
- by means of the computing unit, a causal relationship between the detected speed behavior of the further vehicles (3) and the obscuring object (2) is checked, wherein the check is based on the determination that the further vehicles (3) drive at a significantly reduced driving speed than is required to drive through the curve (K) when their view of the curve is obscured, and
- in the event that there is a causal relationship between the speed behavior of the further vehicles (3) and the obscuring object (2), an average driving speed determined from the driving speeds of the further vehicles (3) for driving through the curve (K) is stored as a speed recommendation in a digital map and made available to vehicles (1) coupled at least to the computing unit by means of data technology.

2. Method according to claim 1,
**characterized in that** the average driving speed for driving trough the curve (K) is fed to an assistance system for automated driving operation of at least the vehicles (1) coupled to the computer unit by means of data technology.

3. Method according to claim 2,
**characterized in that** when approaching the curve (K) in automated driving operation of a vehicle (1) coupled to the computing unit by means of data technology, an indication of a subsequent reduction in a current driving speed of the vehicle (1) is output therein.

4. Method according to any of the preceding claims,
**characterized in that** the speed recommendation is transmitted by means of vehicle-to-vehicle communication to further vehicles (3) located in the environment of a vehicle (1) coupled to the computing unit by means of data technology in the area of the curve (K).

## Revendications

1. Procédé de détermination et d'émission d'une vitesse de conduite adaptée à une situation de conduite de véhicules (1), dans lequel, à l'aide de signaux détectés d'un système de capteurs d'environnement d'un véhicule (1), un objet (2) se trouvant à côté d'une voie de circulation (F) du véhicule (1) et occultant au moins par sections un virage (K) précédant le véhicule (1) est détecté,
**caractérise en ce que**
- les comportements de vitesse d'autres véhicules (3) dans la zone du virage (K), dans lesquels respectivement une vitesse de conduite des autres véhicules (3) est inférieure à une vitesse maximale autorisée localement pour le passage du virage (K), sont transmis du véhicule (1) à une unité de calcul externe au véhicule couplée au véhicule (1) par une technique de traitement des données,
- une position de l'objet (2) occultant est transmise à l'unité de calcul,
- au moyen de l'unité de calcul, une relation de cause à effet entre les comportements de vitesse détectés des autres véhicules (3) et l'objet (2) occultant est vérifiée, dans lequel la vérification est basée sur la constatation que les autres véhicules (3) conduisent avec une vitesse de conduite nettement réduite par rapport à celle nécessaire pour passer le virage (K), lorsque leur vue sur le virage est occultée et
- dans le cas où une relation de cause à effet existe entre les comportements de vitesse des autres véhicules (3) et l'objet (2) occultant, une vitesse de conduite moyenne déterminée à partir des vitesses de conduite des autres véhicules (3) est déposée dans une carte numérique en tant que recommandation de vitesse pour le passage du virage (K) et est mise à disposition au moins des véhicules (1) couplés à l'unité de calcul par une technique de traitement des données.

2. Procédé selon la revendication 1,
**caractérisé en ce que** la vitesse de conduite moyenne pour le passage du virage (K) est acheminée à un système d'assistance pour l'exploitation automatisée de conduite au moins des véhicules (1) couplés à l'unité de calcul par une technique de traitement des données.

3. Procédé selon la revendication 2,
**caractérisé en ce que** lors d'une approche du virage (K) en exploitation automatisée de conduite d'un véhicule (1) couplé à l'unité de calcul par une technique de traitement des données, une indication est émise concernant une réduction suivante d'une vitesse de conduite momentanée du véhicule (1) dans celui-ci.

4. Procédé selon l'une des revendications précédentes,
**caractérisé en ce que** la recommandation de vitesse est envoyée au moyen d'une communication de véhicule à véhicule à d'autres véhicules (3) se trouvant dans l'environnement d'un véhicule (1) couplé à l'unité de calcul par un technique de traitement des données dans la zone du virage (K).
